(19) Europäisches Patentamt
European Patent Office
Office européen des brevets

(11) **EP 2 963 750 B1**

(12) **EUROPEAN PATENT SPECIFICATION**

(45) Date of publication and mention
of the grant of the patent:
**18.10.2017 Bulletin 2017/42**

(51) Int Cl.:
**H02G 3/14** *(2006.01)*

(21) Application number: **15174106.3**

(22) Date of filing: **26.06.2015**

(54) **COVER PART FOR ELECTRICAL INSTALLATION MATERIAL**

DECKELTEIL FÜR ELEKTRISCHES INSTALLATIONSMATERIAL

PIECE DE COUVERCLE POUR MATERIAU D'INSTALLATION ELECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 BE 201400499**

(43) Date of publication of application:
**06.01.2016 Bulletin 2016/01**

(73) Proprietor: **Niko NV**
**9100 Sint-Niklaas (BE)**

(72) Inventor: **VAN RANST, Jurgen**
**9040 Gent (BE)**

(74) Representative: **D'Halleweyn, Nele Veerle Trees Gertrudis**
**Arnold & Siedsma**
**Bezuidenhoutseweg 57**
**2594 AC The Hague (NL)**

(56) References cited:
**EP-A1- 2 194 626        EP-A2- 2 453 541**
**WO-A1-2013/182819     US-A- 3 987 928**

## Description

## Technical field of the invention

The present invention relates to a cover part for electrical installation material such as a switch, a power outlet, a push button, a dimmer or a wall socket. More particularly the invention relates to a cover frame manufactured from a material showing after-shrinkage behaviour.

## Background of the invention

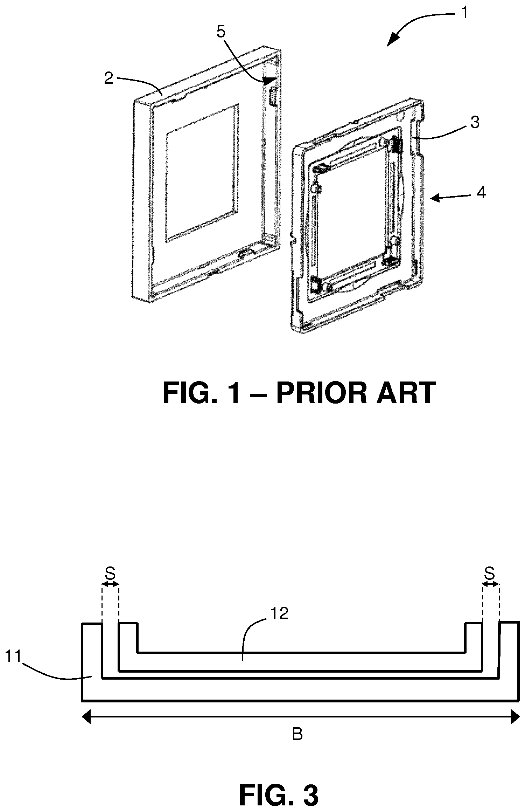

It is known to manufacture cover parts, in particular cover frames for installation material such as, for example, switches, push buttons, dimmers or wall sockets, from synthetic material such as plastic, for example by injection moulding or by compression moulding. A drawback of particular synthetic or plastic materials, however, is that they show after-shrinkage behaviour. With after-shrinkage behaviour is meant that, after manufacturing cover parts from such materials, the cover parts deform because they shrink. This may be a big drawback when the cover part 1 consists of a decorative frame 2 and a base frame 3, as illustrated in Figure 1, because a result of after-shrinkage behaviour is that, for cover parts manufactured from these particular materials, the outer circumference 4 of the base frame 3 cannot be used to position on the edges 5 of the decorative frame 2, because then the decorative frame 2 would burst, crack or break.
Examples of such cover parts are described in the documents WO2013/ 182819 and EP2194626.

## Summary of the invention

It is an aim of embodiments of the present invention to provide a cover part suitable for electrical installation material and comprising a decorative frame and a base frame, whereby the decorative frame is made from a material that shows after-shrinkage behaviour but does not burst or break when being put on the base frame and during use.
According to the present invention, a cover part is provided for electrical installation material, such as for example a switch, a push button, a dimmer or a wall socket. The cover part, more in particular cover frame, comprises a decorative frame and a base frame which are each provided with a hole for providing a function. The decorative frame is made from a material showing after-shrinkage behaviour. According to the present invention, a space is provided between an inner edge of the decorative frame and an outer edge of the base frame. Or in other words, the size of the decorative frame and the size of the base frame are such that, when they are put together, a space is present in between an inner edge of the decorative frame and an outer edge of the base frame. Further, according to the present invention, one of the decorative frame and the base frame is provided with positioning protrusions, such as for example positioning ribs or positioning studs, and the other of the decorative frame and the base frame is provided with positioning slots into which the positioning protrusions fit.
The space that is provided in between the inner edge of the decorative frame and the outer edge of the base frame needs to be able to compensate for the changes in dimensions of the decorative frame as a result of the after-shrinkage behaviour of the material the decorative frame is made of. The space between the inner edge of the decorative frame and the outer edge of the base frame is determined by:

$$ S = \frac{\Delta B}{2} \quad \text{with} \quad \Delta B = k_{PM}\%.B $$

S being the space, B the width of the decorative frame, $\Delta B$ the difference in width of the decorative frame due to after-shrinkage behaviour and $k_{PM}\%$ the post-mould shrinkage percentage of the material from which the decorative frame is made. $\Delta B$ may be between 0.1% and 1.5% of the width of the decorative frame, preferably be between 0.1% and 1%, and still more preferably between 0.1 and 0.5%.
Providing the positioning protrusions and the positioning slots ensures that the centres of the decorative frame and the base frame are always perfectly aligned, so that bursting or cracking of the decorative frame can be prevented when the decorative frame shrinks because of after-shrinkage behaviour of the material the decorative frame is made of.
By providing sufficient space to compensate for after-shrinkage behaviour and by providing the decorative frame and base frame with positioning means, i.e. positioning protrusions on the decorative frame and positioning slots in the base frame or vice versa, the base frame remains positioned centrally in the decorative frame irrespective of the changes due to the after-shrinkage behaviour, so that the holes for providing a function in the decorative frame and base frame are positioned perfectly with respect to each other. This results in a perfectly and safely functioning function and therefore perfectly and safely functioning installation material.
According to embodiments of the invention, the positioning protrusions and the positioning slots may be provided on axes of the decorative frame and the base frame, which axes intersect in the centre of the decorative frame and the base frame. According to certain embodiments, these axes may be the central axes of the decorative frame and the base frame. According to other embodiments, these axes may be the diagonal axes of the decorative frame and the base frame. According to still other embodiments, the axes may be any axes of the decorative frame and the base frame, as long as these axes intersect in the centre of the decorative frame and the base frame. According to embodiments of the invention, the positioning slots may be oriented in the direction of the axes of the decorative frame or the base frame. In other words, the longitudinal direction of the positioning slots may coincide with the axes of the decorative frame or the base frame.

According to particular embodiments, the positioning protrusions and the positioning slots may be provided in the middle of the sides of the decorative frame and the base frame. According to other embodiments, the positioning protrusions and the positioning slots may be provided in the corners of the decorative frame and the base frame. According to still other embodiments, the positioning protrusions and the positioning slots may be provided on any location along a side of the decorative frame and the base frame, as long as these positioning protrusions and positioning slots are located on axes of the decorative frame and the base frame which intersect in the centres of the decorative frame and the base frame.

Embodiments of the present invention may be implemented in cases where the cover part is a single cover part or a multiple, such as for example but not limited to a double or triple, cover part. Embodiments of the invention may in particular be advantageous when the decorative frame is made from a brittle material. With brittle material is meant a material which bursts, breaks or cracks without having to exert too much forces thereon. For example, the decorative frame may be made from a thermosetting material such as for example bakelite (phenol formaldehyde) or urea-formaldehyde.

## Brief description of the drawings

The present invention will be explained in more detail and by a number of exemplary embodiments that are not limiting in any way with reference to the drawings in the annex, in which:

> Figure 1 illustrates an example of a known cover part for electrical installation material for the purposes of explanation;
> Figure 2 illustrates the space provided between an inner edge of the decorative frame and an outer edge of the base frame according to the invention;
> Figure 3 illustrates a single cover part according to an embodiment of the invention;
> Figure 4 illustrates a double cover part according to an embodiment of the invention;
> Figure 5 illustrates a triple cover part according to an embodiment of the invention;
> Figure 6 illustrates a triple cover part according to an embodiment of the invention; and
> Figure 7 illustrates a single cover part according to an embodiment of the invention.
> Figure 8 illustrates a double cover part according to an embodiment of the invention.

In the drawings, identical or corresponding parts in the different embodiments are indicated by the same reference numbers.

## Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

Not all embodiments of the invention comprise all features of the invention. In the following description and claims, any of the claimed embodiments can be used in any combination.

The present invention provides a cover part for electrical installation material. The cover part comprises a decorative frame and a base frame which are each provided with a hole for providing a function. The decorative frame is made from a material showing after-shrinkage behaviour. A space is provided between an inner edge of the decorative frame and an outer edge of the base frame, or in other words that the size of the decorative frame and the size of the base frame are such that when they are put together, a space exists between the inner edge of the decorative frame and the outer edge of the base frame. A cover part according to embodiments of the invention is further characterised in that one of the decorative frame and the base frame is provided with positioning protrusions fitting into positioning slots provided in the other of the decorative frame and the base frame.

By providing sufficient space to compensate for the after-shrinkage behaviour and by providing the decorative frame and base frame with positioning means, the base frame is positioned centrally in the decorative frame, even after shrinking, so that the holes in the decorative frame and the base frame for providing a function are perfectly aligned with respect to each other such that a function can be provided and work smoothly. This results in a perfectly and safely functioning function and therefore perfectly and safely functioning installation material.

The present invention will hereinafter be described by means of different embodiments. It has to be understood that these embodiments are only for the ease of understanding the invention and are not intended to limit the invention in any way.

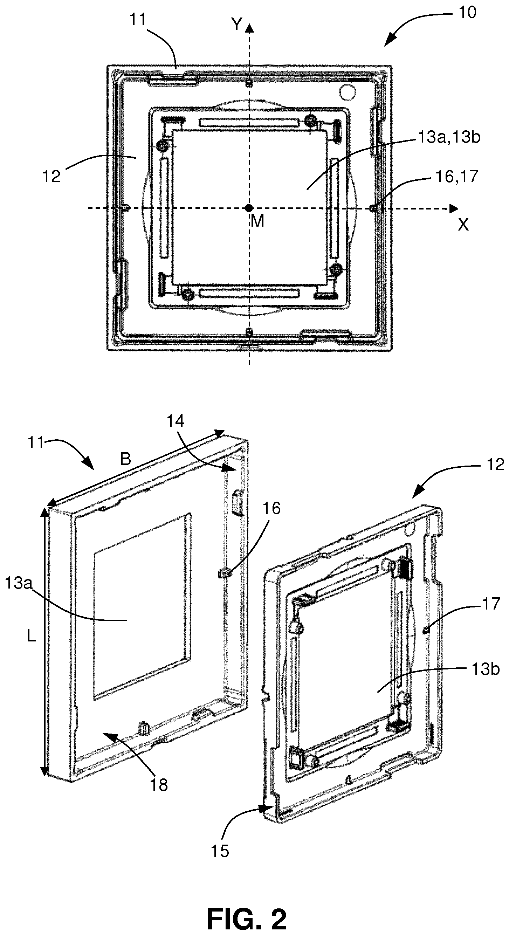

Figure 2 illustrates a first embodiment of a cover part 10 according to the invention. The cover part 10 according to this embodiment is a single cover part and comprises a decorative frame 11 and a base frame 12.

The upper part of Figure 2 illustrates the cover part 10 as a whole as seen from the back side, that is, the cover part 10 with the decorative frame 11 being fixed, for example clicked, onto the base frame 12, such as during use, while the lower part of Figure 2 illustrates the decorative frame 11 and the base frame 12 separately from each other. The decorative frame 11 is made from a material showing after-shrinkage behaviour, such as for example a thermosetting material such as phenol formaldehyde (bakelite) or urea-formaldehyde. With after-shrinkage behaviour is meant that, after manufacturing of the decorative frame 11 and during use, the material shrinks as a result of the continuation of chemical processes which have not yet ceased completely after manufacturing. This will cause the decorative frame to deform, so that, if no precautions are taken, the centres M of the decorative frame 11 and the base frame 12 are no longer positioned in perfect alignment with respect to each other. This makes the provision of the function more difficult and may lead to situations where the function does not function properly and may even lead to unsafe situations.

Therefore, according to the invention, a space S is provided in between an inner edge 14 of the decorative frame 11 and an outer edge 15 of the base frame 12. The space S that is provided needs to be such that is able to compensate for the changes in dimensions of the decorative frame as a result of the after-shrinkage behaviour. The space S between the inner edge 14 of the decorative frame 11 and the outer edge 15 of the base frame 12 is determined by:

$$S = \frac{\Delta B}{2} \quad with \quad \Delta B = k_{PM}\%.B$$

S being the space, B the width of the decorative frame 11, $\Delta B$ the difference in width of the decorative frame 11 due to after-shrinkage behaviour and $k_{PM}\%$ the post-mould shrinkage percentage of the material from which the decorative frame 11 is made. $\Delta B$ may be between 0.1 % and 1.5% of the width of the decorative frame 11, preferably be between 0.1% and 1%, and still more preferably between 0.1 and 0.5%. This is schematically illustrated in Figure 3.

However, providing sufficient space S in between the inner edge 14 of the decorative frame 11 and the outer edge 15 of the base frame 12 is not enough to compensate for all consequences of the after-shrinkage behaviour. By only providing this space S, the position of the hole 13a in the decorative frame 11 with respect to the hole 13b in the base frame 12 cannot be guaranteed. However, it is of high importance that, after after-shrinkage has occurred, the hole 13a in the decorative frame 11 is still perfectly aligned with the hole 13b in the base frame 12 such that the function can be provided smoothly and can function without failure. Therefore, according to the invention, positioning means 16, 17 are provided as well. According to the present embodiment, on the inside of the decorative frame 11, positioning protrusions 16 are provided and, in the base frame 12, positioning slots 17 are provided. According to the present embodiment, the positioning protrusions are designed as positioning ribs 16 which are provided on the inner edge 14 of the decorative frame 11. Preferably the positioning ribs 16 may be fixedly provided on the inner edge 14 and the bottom 18 of the decorative frame 11. This may, for example, be achieved by providing the decorative frame 11 and the positioning ribs 16 as a whole, in other words, in one piece, or by fixing the positioning ribs 16 to the inner edge 14 and the bottom 18 by, for example, gluing. An advantage thereof is that, with the smallest possible positioning ribs 16, still a greatest possible strength is achieved. The smaller the positioning ribs 16 are, the smaller the chance that the positioning ribs 16 can be seen on the front side of the decorative frame 11. The positioning slots 17 in the base frame 11 are formed such that the positioning ribs 16 of the decorative frame 11 fit into them. Preferably, the positioning slots 17 are slightly larger than the positioning ribs 16. Further, preferably the positioning ribs 16 and the positioning slots 17 are provided on axes X,Y of respectively the decorative frame 11 and the base frame 12 which intersect in the centre M, and in the middle of the outer sides of respectively the decorative frame 11 and the base frame 12. In the present embodiment, the positioning ribs 16 and the positioning slots 17 are provided on the central axes X, Y of respectively the decorative frame 11 and the base frame 12. These central axes X,Y intersect in the centre M, as illustrated in the upper part of Figure 2. The positioning slots 17 are oriented in the direction of the central axes X,Y. As can be seen in the Figure, always two positioning protrusions 16 are provided on each axis of the decorative frame 11 and two positioning slots 17 on each axis of the base frame 12. In other words, the longitudinal direction of the positioning slots 17 is situated along the central axes X,Y. The positioning ribs 16 have a centring function in one direction and are free in the other direction. Because such positioning ribs 16 are provided both on the central X axis and on the central Y axis, the decorative frame 11, and therefore also the hole 13a for the function, remains positioned with respect to the base frame 12 such that the function can easily be provided, and can also function perfectly after placement.

Hereinafter some further embodiments will be described. These embodiments have the same advantages of the embodiment described above and therefore will not be repeated each time. The following embodiments are only intended for illustrative purposes and to demonstrate how the invention can be implemented in different manners, and are not intended to limit the invention in any way.

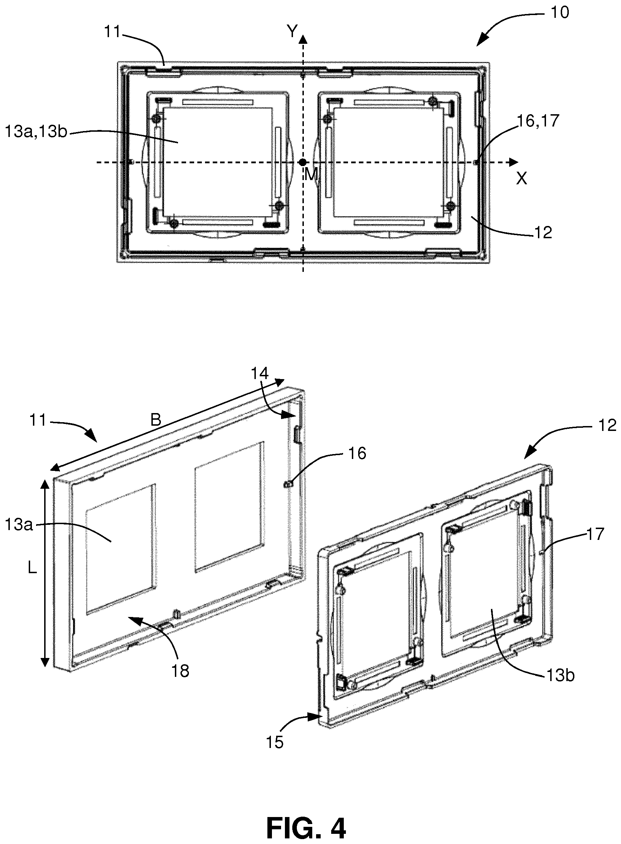

Figure 4 illustrates a further embodiment in which the cover part 10 is a double cover part 10. Here as well, the upper part of the Figure shows the cover part 10 as a whole as seen from the back side, that is, the cover part 10 with the decorative frame 11 being fixed, for example clicked, onto the base frame 12, such as during use, while the lower part of Figure 4 illustrates the decorative frame 11 and the base frame 12 separately from each other. To prevent breaking or cracking of the decorative frame 11, also according to this embodiment, sufficient space S is provided between the inner edge 14 of the decorative frame 11 and the outer edge 15 of the base frame 12. As already described above, this space S is determined by:

$$S = \frac{\Delta B}{2} \quad with \quad \Delta B = k_{PM}\%.B$$

S being the space, B the width of the decorative frame 11, $\Delta B$ the difference in width of the decorative frame 11 due to after-shrinkage behaviour and $k_{PM}\%$ the post-mould shrinkage percentage of the material from which the decorative frame 11 is made. $\Delta B$ may be between 0.1 % and 1.5% of the width of the decorative frame 11, preferably be between 0.1% and 1%, and still more preferably between 0.1 and 0.5%.

Further, positioning protrusions 16 are provided on the inner edge 14 of the decorative frame 11 and positioning slots 17 in the base frame 12. According to the present embodiment, the positioning protrusions are designed as positioning ribs 16 and the positioning slots 17 are placed and formed such that the positioning ribs 16 fit therein. In a manner similar to the embodiment of Figure 2, the positioning ribs 16 and positioning slots 17 are provided on the central axes X,Y of respectively the decorative frame 11 and the base frame 12, which central axes X,Y intersect in the centre M, and in the middle of the outer sides of respectively the decorative frame 11 and the base frame 12. Here as well, always two positioning protrusions 16 are provided on each axis X of the decorative frame 11 and two positioning slots 17 on each axis Y of the base frame 12.

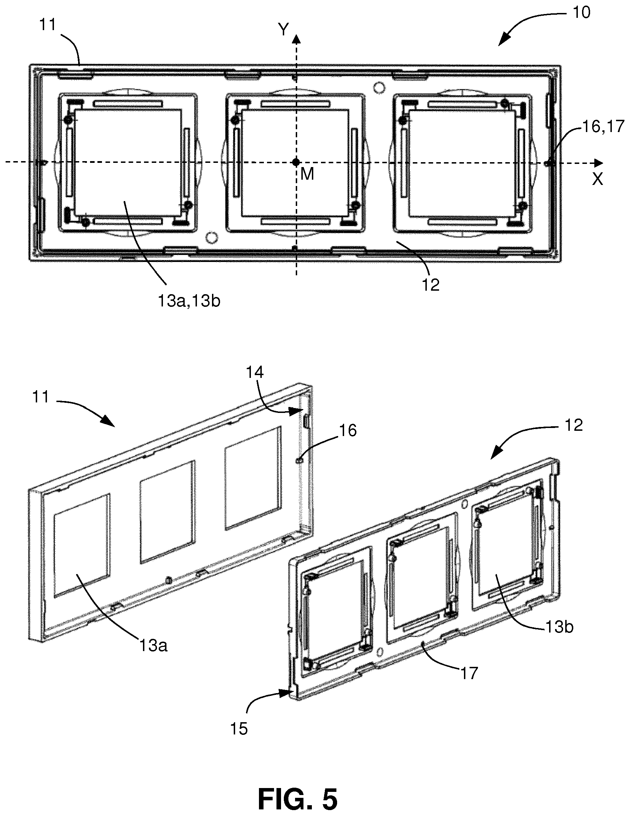

Figure 5 shows a triple cover part 10 according to a further embodiment according to the invention. Here as well, the positioning protrusions 16 are designed as positioning ribs 16 and the positioning ribs 16 and the positioning slots 17 are provided on the central axes X, Y and in the middle of the outer sides of respectively the decorative frame 11 and the base frame 12.

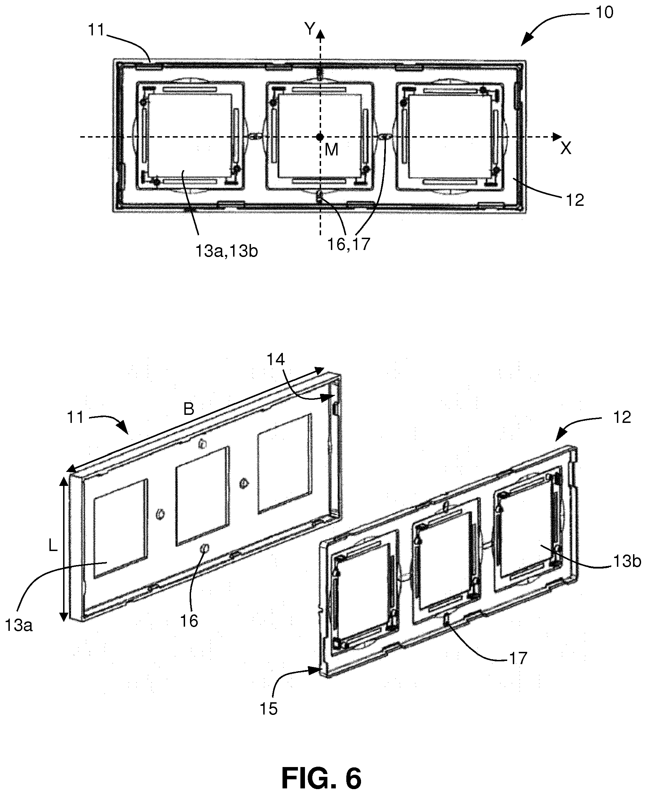

Figure 6 shows a further embodiment according to the invention. According to this embodiment, the cover part 10 is a triple cover part. The difference with the embodiment as illustrated in Figure 5 is that the positioning protrusions 16 are here designed as positioning studs. Here, just like in the above embodiments, the positioning studs 16 and the positioning slots 17 are placed along the central axes X,Y of respectively the decorative frame 11 and the base frame 12. Similar to what was described for the above embodiments, here as well, always two positioning protrusions 16 are provided on each axis X of the decorative frame 11 and two positioning slots 17 are provided on each axis Y of the base frame 12. A difference is that, in the present embodiment, while the positioning studs 16 and positioning slots 17 are provided in the middle of the width B of the outer side of the decorative frame 11 and the base frame 12, in the longitudinal direction L they are not provided on the outer side, but between the first and second and between the second and third hole 13a for the function. Here as well, the positioning slots 17 are oriented according to the direction of the central axes X,Y.

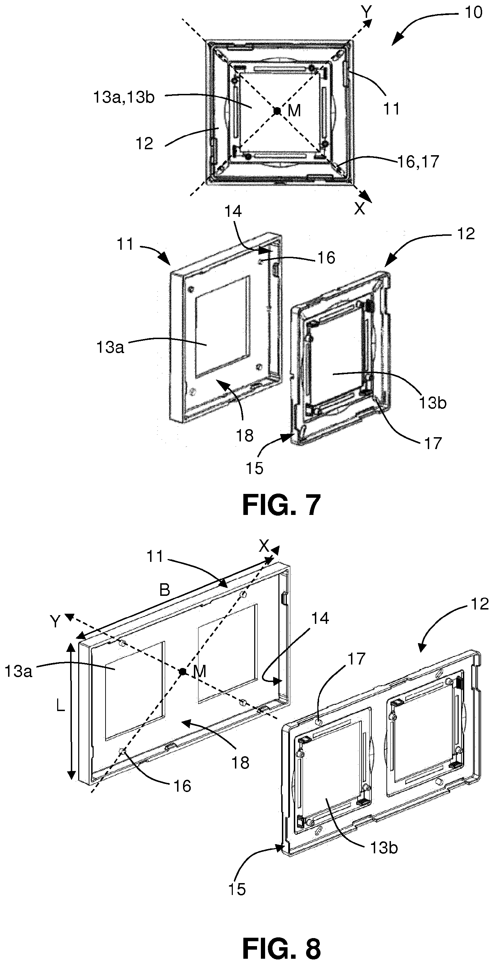

Figure 7 shows a still further embodiment according to the invention. According to this embodiment, the cover part 10 is a single cover part. According to this embodiment, the positioning protrusions 16 are designed as positioning studs. The positioning studs 16 are fixed to the bottom 18 of the decorative frame 11. Here, the positioning studs 16 and the positioning slots 17 are provided in the corners of the cover part 10, and are therefore located on the diagonal axes X,Y of respectively the decorative frame 11 and the base frame 12. The positioning slots 17 are oriented according to the direction of the diagonal axes X,Y of the base frame 12. Here as well, always two positioning protrusions 16 are provided on each axis X of the decorative frame 11 and two positioning slots 17 on each axis Y of the base frame 12.

Figure 8 shows a still further embodiment according to the invention. The cover part 10 is a double cover part. The positioning protrusions 16 are designed as positioning studs. The positioning studs 16 and positioning slots 17 are provided on axes X,Y of respectively the decorative frame 11 and base frame 12 which intersect in the centre M of respectively the decorative frame 11 and the base frame 12. The difference with the above embodiments is that here, according to the present embodiment, the axes X,Y are not the central axes like in Figures 2 and 4 to 6 and not the diagonal axes like in Figure 7. The positioning studs 16 and positioning slots 17 may be placed randomly along the width sides B of respectively the decorative frame 11 and the base frame 12. It is noted that the positioning studs 16 and positioning slots 17 may just as well be placed along the longitudinal sides L (not illustrated) instead of along the width sides B as illustrated in Figure 8, as long as they are located on axes X,Y of respectively the decorative frame 11 and the base frame 12 which intersect in the centre M of the decorative frame 11 and the base frame 12.

Even though, in above embodiments, the positioning protrusions 16 are always provided on the decorative frame 11 and the positioning slots 17 always in the base frame 12, a skilled person will understand that this may just as well be the other way round. According to certain embodiments, the positioning slots 17 may be provided in the decorative frame 11 and the positioning protrusions 16 may be provided in the base frame 12.

It is further noted that, even though in the above embodiments, always two positioning protrusions 16 are provided on each axis X,Y of the decorative frame 11 and two positioning slots 17 on each axis X,Y of the base frame 12, a skilled person will understand that this is not always necessarily the case. According to certain embodiments, the positioning slots 17 may be oriented such that the axis of each of the positioning slots 17 goes through the centre M of the base frame 12, but that therefore two positioning slots 17 are not necessarily on the same axis. The axes of the positioning slots 17 do not always need to coincide with diagonal axes or central axes of the base frame 12 either. As long as the positioning slots 17 are oriented according to an axis going through the centre M of the base frame 12, the advantages of the invention are achieved and these embodiments fall within the scope of the invention.

Further, the invention is not limited to the exemplary embodiments described hereinabove, and a skilled person will understand that combinations of characteristics described in the different embodiments and many modifications are conceivable within the scope of the invention, which is only determined by the following claims.

## Claims

1. A cover part (10) for electrical installation material, wherein the cover part (10) comprises a decorative frame (11) and a base frame (12) each being provided with a hole (13a, 13) for providing a function, one of the decorative frame (11) and the base frame (12) being provided with positioning protrusions (16) and the other of the decorative frame (11) and base frame (12) being provided with positioning slots (17) in which the positioning protrusions (16) fit, **characterised in that** the decorative frame (11) is made from a material showing after- shrinkage behaviour, a space (S) is provided between an inner edge (14) of the decorative frame (11) and an outer edge (15) of the base frame (12) and each of the positioning slots (17) is oriented such that their axes go through the centre (M) of the decorative frame (11) or the base frame (12).

2. A cover part (10) according to claim 1, wherein the positioning protrusions (16) and the positioning slots (17) are provided in the middle of the sides of the decorative frame (11) and the base frame (12).

3. A cover part (10) according to claim 1 or 2, wherein the positioning protrusions (16) and the positioning slots (17) are provided in the corners of the decorative frame (11) and the base frame (12).

4. A cover part (10) according to claim 1 or 2, wherein the positioning protrusions (16) and the positioning slots (17) are provided randomly along the width (B) of the decorative frame (11) and the base frame (12).

5. A cover part (10) according to any of the previous claims, wherein the positioning protrusions (16) and the positioning slots (17) are provided on axes (X,Y) of the decorative frame (11) and the base frame (12) which intersect in the centre (M) of the decorative frame (11) and the base frame (12).

6. A cover part (10) according to claim 5, wherein the positioning protrusions (16) and the positioning slots (17) are provided on the central axes (X,Y) of the decorative frame (11) and the base frame (12).

7. A cover part (10) according to claim 5, wherein the positioning protrusions (16) and the positioning slots (17) are provided on the diagonal axes (X,Y) of the decorative frame (11) and the base frame (12).

8. A cover part (10) according to any of the previous claims, wherein the positioning protrusions (16) are implemented as positioning ribs or positioning studs.

9. A cover part according to any of the previous claims, wherein the positioning protrusions (16) are provided on the decorative frame (11) and the positioning slots (17) in the base frame (12).

10. A cover part according to any of claims 1 to 8, wherein the positioning protrusions (16) are provided on the base frame (12) and the positioning slots (17) in the decorative frame (11).

11. A cover part (10) according to any of the previous claims, wherein the cover part (10) is a single cover part.

12. A cover part (10) according to any of claims 1 to 10, wherein the cover part (10) is a multiple cover part.

13. A cover part (10) according to any of the previous claims, wherein the decorative frame (11) is made from a brittle material.

14. A cover part (10) according to claim 13, wherein the decorative frame (11) is made from a thermosetting material.

## Patentansprüche

1. Abdeckungsteil (10) für elektrisches Installationsmaterial, wobei das Abdeckungsteil (10) einen dekorativen Rahmen (11) und einen Grundrahmen (12) umfasst, die jeweils mit einem Loch (13a, 13) zum Bereitstellen einer Funktion versehen sind, wobei einer des dekorativen Rahmens (11) und des Grundrahmens (12) mit Positionierungsvorsprünge (16) versehen ist und der andere des dekorativen Rahmens (11) und des Grundrahmens (12) mit Positionierungsnuten (17) versehen ist, in die die Positionierungsvorsprünge (16) passen, **dadurch gekenn-**

**zeichnet, dass** der dekorative Rahmen (11) aus einem Material gefertigt ist, das ein Nachschrumpfverhalten zeigt, ein Freiraum (S) zwischen einer Innenrand (14) des dekorativen Rahmens (11) und einer äußenrand (15) des Grundrahmens (12) vorgesehen ist, und jeder der Positionierungsnuten (17) so ausgerichtet ist, dass ihre Achsen durch die Mitte (M) des dekorativen Rahmens (11) oder des Grundrahmens (12) hindurch verlaufen.

2. Abdeckungsteil (10) nach Anspruch 1, wobei die Positionierungsvorsprünge (16) und die Positionierungsnuten (17) in der Mitte der Seiten des dekorativen Rahmens (11) und des Grundrahmens (12) vorgesehen sind.

3. Abdeckungsteil (10) nach Anspruch 1 oder 2, wobei die Positionierungsvorsprünge (16) und die Positionierungsnuten (17) in den Ecken des dekorativen Rahmens (11) und des Grundrahmens (12) vorgesehen sind.

4. Abdeckungsteil (10) nach Anspruch 1 oder 2, wobei die Positionierungsvorsprünge (16) und die Positionierungsnuten (17) in zufälliger Weise entlang der Breite (B) des dekorativen Rahmens (11) und des Grundrahmens (12) vorgesehen sind.

5. Abdeckungsteil (10) nach einem der vorstehenden Ansprüche, wobei die Positionierungsvorsprünge (16) und die Positionierungsnuten (17) auf Achsen (X, Y) des dekorativen Rahmens (11) und des Grundrahmens (12) vorgesehen sind, die sich in der Mitte (M) des dekorativen Rahmens (11) und des Grundrahmens (12) schneiden.

6. Abdeckungsteil (10) nach Anspruch 5, wobei die Positionierungsvorsprünge (16) und die Positionierungsnuten (17) auf den Mittenachsen (X, Y) des dekorativen Rahmens (11) und des Grundrahmens (12) vorgesehen sind.

7. Abdeckungsteil (10) nach Anspruch 5, wobei die Positionierungsvorsprünge (16) und die Positionierungsnuten (17) auf den Diagonalachsen (X, Y) des dekorativen Rahmens (11) und des Grundrahmens (12) vorgesehen sind.

8. Abdeckungsteil (10) nach einem der vorstehenden Ansprüche, wobei die Positionierungsvorsprünge (16) als Positionierungsrippen oder Positionierungsbolzen ausgeführt sind.

9. Abdeckungsteil nach einem der vorstehenden Ansprüche, wobei die Positionierungsvorsprünge (16) an dem dekorativen Rahmen (11) und die Positionierungsnuten (17) in dem Grundrahmen (12) vorgesehen sind.

10. Abdeckungsteil nach einem der Ansprüche 1 bis 8, wobei die Positionierungsvorsprünge (16) an dem Grundrahmen (12) und die Positionierungsnuten (17) in dem dekorativen Rahmen (11) vorgesehen sind.

11. Abdeckungsteil (10) nach einem der vorstehenden Ansprüche, wobei das Abdeckungsteil (10) ein einziges Abdeckungsteil ist.

12. Abdeckungsteil (10) nach einem der Ansprüche 1 bis 10, wobei das Abdeckungsteil (10) ein mehrfaches Abdeckungsteil ist.

13. Abdeckungsteil (10) nach einem der vorstehenden Ansprüche, wobei der dekorative Rahmen (11) aus einem spröden Material hergestellt ist.

14. Abdeckungsteil (10) nach Anspruch 13, wobei der dekorative Rahmen (11) aus einem wärmehärtbaren Material hergestellt ist.


**Revendications**

1. Pièce de couverture (10) pour un matériau d'installation électrique, où la pièce de couverture (10) comprend un cadre décoratif (11) et un cadre de base (12) chacun comportant un trou (13a, 13) pour fournir une fonction, un cadre parmi le cadre décoratif (11) et le cadre de base (12) comportant des saillies de positionnement (16) et l'autre cadre parmi le cadre décoratif (11) et le cadre de base (12) comportant des encoches de positionnement (17) dans lesquelles s'ajustent les saillies de positionnement (16), **caractérisée en ce que** le cadre décoratif (11) est fabriqué à partir d'un matériau présentant un comportement après retrait, un espace (S) est fourni entre un bord interne (14) du cadre décoratif (11) et un bord externe (15) du cadre de base (12) et chacune des encoches de positionnement (17) est orientée de telle sorte que leurs axes passent par le centre (M) du cadre décoratif (11) ou du cadre de base (12).

2. Pièce de couverture (10) selon la revendication 1, dans laquelle les saillies de positionnement (16) et les encoches de positionnement (17) sont fournies au milieu des côtés du cadre décoratif (11) et du cadre de base (12).

3. Pièce de couverture (10) selon la revendication 1 ou 2, dans laquelle les saillies de positionnement (16) et les encoches de positionnement (17) sont fournies dans les coins du cadre décoratif (11) et du cadre de base (12).

4. Pièce de couverture (10) selon la revendication 1 ou 2, dans laquelle les saillies de positionnement (16) et les encoches de positionnement (17) sont fournies de manière aléatoire le long de la largeur (B) du cadre décoratif (11) et du cadre de base (12).

5.  Pièce de couverture (10) selon l'une quelconque des revendications précédentes, dans laquelle les saillies de positionnement (16) et les encoches de positionnement (17) sont fournies sur des axes (X, Y) du cadre décoratif (11) et du cadre de base (12) qui se coupent au centre (M) du cadre décoratif (11) et du cadre de base (12).

6.  Pièce de couverture (10) selon la revendication 5, dans laquelle les saillies de positionnement (16) et les encoches de positionnement (17) sont fournies sur les axes centraux (X,Y) du cadre décoratif (11) et du cadre de base (12).

7.  Pièce de couverture (10) selon la revendication 5, dans laquelle les saillies de positionnement (16) et les encoches de positionnement (17) sont fournies sur les axes diagonaux (X,Y) du cadre décoratif (11) et du cadre de base (12).

8.  Pièce de couverture (10) selon l'une quelconque des revendications précédentes, dans laquelle les saillies de positionnement (16) sont mises en oeuvre en tant que nervures de positionnement ou goujons de positionnement.

9.  Pièce de couverture selon l'une quelconque des revendications précédentes, dans laquelle les saillies de positionnement (16) sont fournies sur le cadre décoratif (11) et les encoches de positionnement (17) dans le cadre de base (12).

10. Pièce de couverture selon l'une quelconque des revendications 1 à 8, dans laquelle les saillies de positionnement (16) sont fournies sur le cadre de base (12) et les encoches de positionnement (17) dans le cadre décoratif (11).

11. Pièce de couverture (10) selon l'une quelconque des revendications précédentes, dans laquelle la pièce de couverture (10) est une pièce de couverture unique.

12. Pièce de couverture (10) selon l'une quelconque des revendications 1 à 10, dans laquelle la pièce de couverture (10) est une pièce de couverture multiple.

13. Pièce de couverture (10) selon l'une quelconque des revendications précédentes, dans laquelle le cadre décoratif (11) est fabriqué à partir d'un matériau cassant.

14. Pièce de couverture (10) selon la revendication 13, dans laquelle le cadre décoratif (11) est fabriqué à partir d'un matériau thermodurcissable.

# FIG. 1 – PRIOR ART

# FIG. 3

**FIG. 2**

**FIG. 4**

**FIG. 5**

**FIG. 6**

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013182819 A
- EP 2194626 A